# EUROPEAN PATENT APPLICATION

(11) **EP 1 107 090 A1**
(43) Date of publication of application: **13.06.2001**
(21) Application number: 00204128.3
(22) Date of filing: 22.11.2000
(51) Int. Cl.: G06F 1/035

(54) **First order interpolation with input value interval detection**

(30) Priority: 30.11.1999 FR 9915044
(71) Applicant: Koninklijke Philips Electronics N.V., 5621 BA Eindhoven (NL)
(72) Inventor: Gobert, Jean, 75008 Paris (FR)
(74) Representative: den Braber, Gerard Paul

(57) **Abstract**

A device supplies an output value Y in response to an input value X in accordance with a given function F. The function F can be, for example, a gamma correction function for a video signal. The device operates as follows. An input section (INP) derives a table input value (XT) and an interpolator input value (XI) from the input value (X). A table (TBL) supplies a table value (YT) in response to the table input value (XT). An interpolator (INT) supplies an interpolation value (YI) in response to the interpolator input value (YI). An output section (OUT) combines the table value (YT) and the interpolation value (YI) so as to obtain the output value (Y).

The input section (INP) comprises an interval detector (DET) which defines a plurality of input value intervals (I1, I2). This detector (DET) supplies an interval indication (IND) which indicates the interval (I1) in which the input value (X) lies. The input section (INP) further comprises an input value former (IVC) for forming the table input value (XT) and the interpolator input value (XI) in dependence on the interval indication (IND). The table input value (XT) and the interpolator input value (XI) are determined, respectively, by a more significant part (MSP) of the input value and the complementary less significant part (LSP) of variable magnitudes in accordance with the interval indication (IND).

By means of such a device a satisfactory accuracy of the output value can be obtained while the table is of a moderate size.

## Description

### FIELD OF THE INVENTION

The invention relates to a device for and a method of supplying an output value Y in response to an input value X in accordance with a given function F: Y = F(X). The invention can be employed in, for example, an image processing system for carrying out a gamma correction in a digital manner.

### BACKGROUND OF THE INVENTION

A device as defined in the opening paragraph can be realized by means of a table. For example, the table may contain an output value Y desired for each different input value X. If there are comparatively many different input values X the table will be comparatively large. For example, an input value X having 10 bits requires a table containing 1024 different output values.

The following principle makes it possible to reduce the size of the table. It is assumed that the input value has 10 bits. The 5 more significant bits are applied to the table. The table contains 32 table values. In response to the 5 more significant bits the table supplies a table value. The table value forms a gross output value. The 5 less significant bits of the input value are applied to an interpolator. In response to the 5 less significant bits the interpolator supplies an interpolation value. The interpolator, for example, multiplies the 5 less significant bits by an interpolation coefficient. The interpolation value is added to the table value in order to obtain an output value. This principle for realizing an arbitrary transfer function may therefore be referred to as "tabulation and interpolation". The integrated circuit TM2700, which belongs to the Trimedia family, features a gamma correction which operates in accordance with this principle.

### SUMMARY OF THE INVENTION

It is an object of the invention to provide a cost reduction.

The invention takes into account the following aspects. The "tabulation and interpolation" principle merely enables an approximation to the desired function to be obtained. It is assumed that the input value is such that the less significant bits are all zeros (0). In this case, there is no interpolation. The output value will be formed exclusively by the table value supplied in response to the more significant bits. Consequently, the accuracy of the output value will be determined exclusively by the number of bits in the table value.

It is now assumed that the input value is such that at least one of the less significant bits is one (1). In this case, an interpolation is made on the basis of the less significant bits. This interpolation yields an interpolation value. The output value will be formed by the table value and by the interpolation value. The accuracy of the output value will depend on the accuracy of the interpolation and the contribution of the interpolation value to the output value.

The accuracy of the interpolation generally varies from one input value interval to another. There will be one or more intervals where the accuracy will be comparatively high and one or more intervals where the accuracy will be comparatively poor.

The contribution of the interpolation value to the output value depends on the number of less significant bits on the basis of which the interpolation is made. The interpolation value provides a greater contribution to the output value and, as a consequence, the accuracy of the output value decreases according as the number of less significant bits on the basis of which the interpolation is made increases.

Let it be assumed that the prior-art "tabulation and interpolation" principle is applied. How can a satisfactory accuracy be achieved? The input value intervals for which the interpolation will be less accurate should then be identified. Subsequently, the interpolation should be made on the basis of a number less significant bits which is small enough to achieve a satisfactory accuracy in this interval. This implies that the accuracy in the other intervals will be even better. The bits which are not used for the interpolation, i.e. the more significant bits, are applied to the table. Let K, K being an integer, be the number of more significant bits applied to the table. In that case the size of the table will be K to the power of 2. Consequently, the size of the table is related directly to the number of bits that can be used for effecting the interpolation with the desired accuracy.

In accordance with the invention, a device supplies an output value in response to an input value in accordance with a given function in the following manner. An input section derives from the input value a table input value and an interpolator input value. The input section includes an interval detector which defines a plurality of input value intervals. This detector supplies an interval indication which indicates the interval in which the input value lies. The input section further includes an input value former for forming the table input value and the interpolator input value as a function of the interval indication. The table input value and the interpolator input value are determined, respectively, by a more significant part of the input value and the complementary less significant part of variable magnitudes in accordance with the interval indication. A table supplies a table value in response to the table input value. An interpolator supplies an interpolation value in response to the interpolator input value. An output section combines the table value and the interpolation value so as to obtain the output value.

Thus, in accordance with the invention, the number of bits used for carrying out the interpolation is variable, whereas it is fixed in the prior art. This makes it possible to use a comparatively small number of less significant bits for carrying out the interpolation in an input value interval for which the interpolation is less accurate. At the same time, a greater number of less significant bits can be used in an input value interval for which the interpolation is comparatively accurate. This means that in such an interval there will be a smaller number of more significant bits which form an input value for the table. Thus, in accordance with the invention the table will be smaller than in the prior art.

In a way, the invention may be said to enable the accuracy to be equalized over all the input values and that this is advantageous for a smaller table. It is true that an input section of a device in accordance with the invention will be less simple than the input section of the prior-art device, the last-mentioned input section being formed by a simple wiring. However, a reduction of the size of the table results in a cost reduction which will generally outweigh the costs of a less simpler input section. Consequently, the invention makes it possible to obtain a cost reduction.

The invention and additional features which can be used to advantage in order to enable the invention to be carried into effect will be described in more detail hereinafter with reference to the drawings.

### BRIEF DESCRIPTION OF THE DRAWINGS

Figure 1 is a conceptual diagram which illustrates basic features of the invention as defined in the first Claim;
Figure 2 is a block diagram which illustrates an image processing system in accordance with the invention.
Figure 3 is a diagram which illustrates a gamma correction function as well as an approximation to such a function by interpolation; and
Figure 4 is a block diagram which illustrates a gamma correction circuit in accordance with the invention.

### DESCRIPTION OF EMBODIMENTS OF THE INVENTION

The following remarks relate to the reference signs. Similar entities bear identical reference letters in all the Figures. A plurality of similar entities may appear in a single Figure. In that case a numeral is suffixed to the reference letters in order to distinguish between similar entities. The numeral or suffix may be omitted for convenience. This applies both to the description and to the Claims.

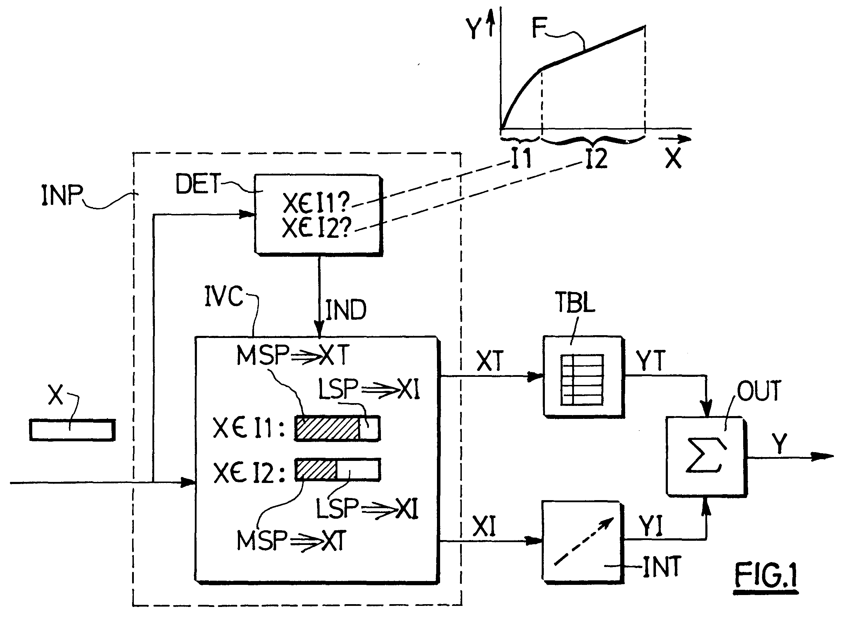

Figure 1 illustrates basic features of the invention as set forth hereinbefore. A device supplies an output value Y in response to an input value X in accordance with a given function F in the following manner. An input section INP derives from the input value X a table input value XT and an interpolator input value XI. A table TBL supplies a table value YT in response to the table input value XT. An interpolator INT supplies an interpolation value YI in response to the interpolator input value YI. An output section OUT combines the table value YT and the interpolation value YI so as to obtain the output value Y.

The input section INP includes an interval detector DET which defines a plurality of input value intervals II, I2. This detector DET supplies an interval indication IND which indicates the interval I1 in which the input value X lies. The input section INP further includes an input value former IVC for forming the table input value XT and the interpolator input value XI as a function of the interval indication IND. The table input value XT and the interpolator input value XI are determined, respectively, by a more significant part MSP of the input value and the complementary less significant part LSP of variable magnitudes in accordance with the interval indication IND.

The features illustrated in Figure 1 can be employed in, for example, an image processing system. Many image processing systems include a gamma correction for compensating a non-linear characteristic of an image sensor or a display device. The gamma correction is a non-linear function.

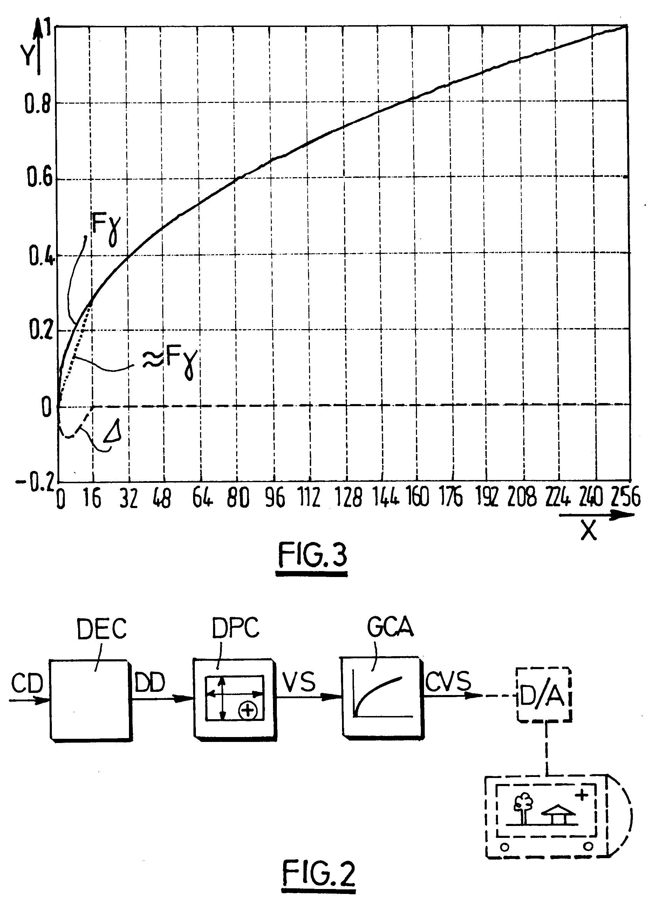

Figure 2 shows an image processing system. The system includes an image decoder DEC, a display preparation circuit DPC and a gamma correction circuit GCA. It basically operates as follows. The image decoder DEC decodes coded data CD so as to obtain decoded data DD representing one or more images. The display preparation circuit DPC processes the decoded data so as to obtain a desired display, for example by means of a format conversion in terms of number of lines per image and number of pixels per line. Another possible processing operation is the insertion of a text, a logo or an image into the main image. The display preparation circuit DPC supplies a video signal VS in the form of a series of binary values. The gamma correction circuit GCA processes the video signal VS in accordance with a gamma correction function so as to obtain a corrected video signal CVS. The corrected video signal CVS can be applied to a display device via, for example, a digital-to-analog converter.

Figure 3 shows a gamma correction function Fy as a solid line. Figure 3 is a graph whose horizontal axis represents an input value X and whose vertical axis represents an output value Y. The input value X comprises 8 bits. Consequently, there are 256 different input values from 0 to 255.

Figure 3 also shows a dotted line which is a conventional approximation ≈Fγ to the gamma correction function by a linear interpolation in various segments. Each segment comprises 16 input values. There are 16 segments: a segment comprising the input values 0-15, another segment comprises the input values 16 - 31, etc. A linear interpolation is effected independently in each segment. This means that there are 16 interpolation coefficients.

Figure 3 also illustrates, as a dashed line, the accuracy of the conventional approximation as described hereinbefore. More exactly, the dashed curve represents the absolute error Δ of the conventional approximation. The accuracy is comparatively low in the segment comprising the input values 0-15. Conversely, the accuracy is comparatively high in the other segments.

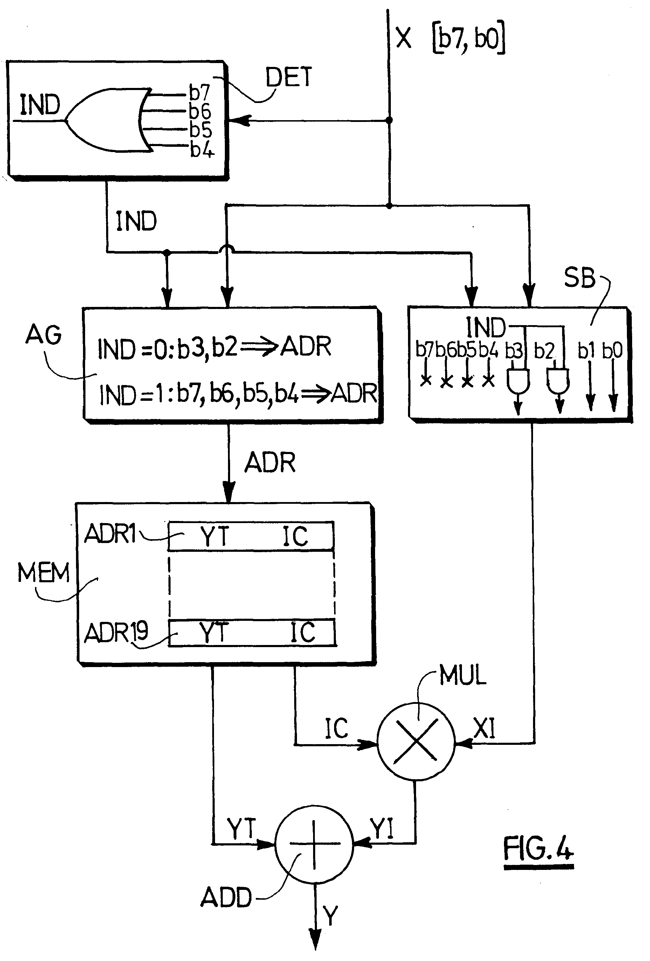

Figure 4 shows the gamma correction circuit GCA of the image processing system shown in Figure 2. The gamma correction circuit GCA supplies an output value Y in response to an input value X in accordance with the gamma correction function shown in Figure 3. The device comprises an interval detector DET, an address generator AG, a bit selector SB, a memory MEM, a multiplier MUL, and an adder ADD. It has already been stated that the input value X comprises 8 bits. The most significant bit is referenced b7 and the least significant bit is referenced b0. Thus, the numeral in the reference of a bit indicates its weight.

The gamma correction circuit GCA shown in Figure 4 operates as follows. The interval detector DET supplies an interval indication IND on the basis of the input value X. If the input value X lies between 0 and 15, the interval indication equals 0. If the input value lies between 16 and 255 the interval indication is 1. The interval detector DET can be very simple. It is adequate to apply an OR function to the 4 more significant bits of the input value X: IND = b7 OR b6 OR b5 OR b4.

The address generator generates an address ADR on the basis of the input value X and the interval indication IND. In more exact terms, if the interval indication IND is 0, the address generator AG only considers the bits b3, b2 of the input value X. Thus, the address generator AG generates 4 different addresses X for the input values lying between 0 and 15. There is an address ADR1 for the input values 0 - 3, an address ADR2 for the input values 4 - 7, an address ADR3 for the input values 8 - 11, and an address ADR4 for the input values 12 - 15.

If the interval indication IND is 1, the address generator AG only considers the 4 more significant bits b7-b4 of the input value X. Thus, the address generator AG generates 15 different addresses for the input values lying between 16 and 255. There is an address ADR5 for the input values 16 - 31, an address ADR6 for the input values 32 - 47, etc. Thus, the final address will be ADR19 for the input values 240 - 255. The address generator AG can be formed, for example, by comparatively simple logic circuits.

At each address ADR the memory MEM stores a table value YT and an interpolation coefficient IC. Consequently, the memory contains 19 table values YT and 19 interpolation coefficients IC. As a function of the address ADR generated in the address generator AG, the memory MEM supplies the table value YT and the interpolation coefficient IC stored at this address.

The bit selector SB supplies interpolator input value XI based on the input value X and the interval indication IND. If the interval indication IND is 0 the bit selector SB will use only the 2 less significant bits of the input value X: b1, b0. These 2 bits will form the interpolator input value XI. If the interval indication IND is 1 the bit selector SB will use only the 4 less significant bits of the input value X: b3 - b0. These bits will form the interpolator input value XI.

If necessary, the bit selector SB complements the 2 or 4 bits of the input value X with logic zeros representing more significant bits. Thus, the bit selector SB ensures that the interpolator input value comprises a given desired number of bits. The bit selector SB can be very simple. It suffices to apply the bits b3 - b0 of the input value X to the inputs of corresponding weight of the multiplier MUL in the following manner. Each of the bits b3, b2 passes through an AND logic circuit which receives the interval indication IND. The bits b1, b0 are applied directly to the multiplier MUL.

The multiplier MUL multiplies the interpolator input value XI by the interpolator coefficient IC from the memory MEM. The result of this multiplication forms an interpolation value YI. If required, the result of the multiplication is shifted in order to obtain the interpolation value YI. The effect of such a shift is that the weights of all the bits forming the multiplication result is changed by one or more units (such an operation is usually referred to as "bit shift").

The adder ADD adds the interpolation value YI and the table value YT from the memory MEM to one another. The result of this addition forms the output value Y.

The gamma correction circuit GCA shown in Figure 4 is an example of an implementation of the characteristic features illustrated in Figure 1. The detector DET defines two input value intervals. The input values lying between 0 and 15 form a first interval I1. The input values lying between 16 and 255 form a second interval I2. The two intervals I1, I2 do not overlap.

The input value former IVC shown in Figure 1 takes the form of a group of blocks including the address generator AG and the bit selector SB in Figure 4. The table input value XT in Figure 1 takes the form of the address ADR in Figure 4. The address is determined by a more significant part MSP comprising six more significant bits b7 - b2 in the interval I1 and comprising 4 more significant bits b7-b4 in the interval I2. The interpolator input value XI is determined by a complementary less significant part LSP comprising 2 less significant bits b1 - b0 in the interval I1 and 4 less significant bits in the interval I2.

The table TBL in Figure 1 is implemented as the memory MEM in Figure 4. The interpolator INT shown in Figure 1 takes the form of the multiplier MUL. The output section OUT shown in Figure 1 takes the form of an adder ADD in Figure 4.

In fact, the gamma correction circuit GCA shown in Figure 4 divides the interval I1 into 4 segments, each segment comprising 4 input values. It divides the intervals I2 and 15 into 15 segments, each segment comprising 16 input values. The device independently effects an interpolation for each segment. The segments are comparatively small where the interpolation accuracy is comparatively poor: in the interval I1. The segments are comparatively large where the interpolation accuracy is comparatively high: in the interval I2. Thus, it is possible to achieve a higher accuracy than that of the conventional approximation illustrated in Figure 3 without this requiring significantly more storage space.

The Figures and their description are given to illustrate and not to limit the invention. It is evident that there are numerous alternatives within the scope of the appended Claims. In conclusion, some remarks are made in this respect.

There are many ways of representing a value. Figure 4 shows only one possibility, where the input value is represented by means of binary numbers. It is also possible to represent an input value by means of decimal numbers. The manner in which the input value is represented is of little relevance to the present invention.

There are many ways of carrying out an interpolation. In principle, an interpolation can be made in accordance with any function. Figure 4 merely shows one possibility where an interpolation is carried out in accordance with a linear function. It is also possible to carry out an interpolation in accordance with, for example, a cubic function. Moreover, the interpolation can be fixed or variable. Figure 4 merely shows one possibility in which the interpolation varies as a function of an interpolation coefficient obtained from a table. The interpolation can also be fixed. In that case, it is not necessary to store interpolation coefficients in the table. It is to be note also that there are many ways of making an interpolation vary. For example, it is possible to derive an interpolation coefficient from a plurality of adjacent table values. In that case, it is not necessary to store interpolation coefficients in the table.

There are many ways of realizing a table. Figure 4 merely shows one possibility in which the table is realized by means of a memory. Alternatively, a table can be realized by means of a programmable logic circuit (referred to as: programmable array logic). There are many ways of defining input value intervals. Figure 4 merely shows one possibility in which two intervals are defined. It is also possible to define a greater number of intervals.

There are many ways of realizing functions by means of items of hardware or software or by means of a combination of the two. In this respect, the Figures are highly diagrammatic, each Figure representing merely one possibility. Thus, although a Figure shows different functions as separate blocks, this does not exclude the fact that a single item of hardware or software performs a plurality of functions. This does neither exclude the fact that one function can be effected by a combination of items of hardware or software.

Any reference signs given in parentheses in a Claim should not be interpreted in a limitative way. The verb "to comprise" does not exclude the use of other elements or steps defined in a Claim. The indefinite article "a" preceding an element or step does not exclude the use of a plurality of these elements or steps.

## Claims

1. An image processing system comprising a gamma correction circuit for supplying an output value (Y) in response to an input value (X) in accordance with a gamma correction function (F): Y = F(X), which gamma correction circuit comprises:
- an input section (INP) for deriving a table input value (XT) and an interpolator input value (XI) from the input value (X);
- a table (TBL) for supplying a table value (YT) in response to the table input value (XT);
- an interpolator (INT) for supplying an interpolation value (YI) in response to the interpolator input value (YI); and
- an output section (OUT) for combining the table value (YT) and the interpolation value (YI) so as to obtain the output value (Y),
characterized in that the input section (INP) of the device comprises:
- an interval detector (DET) which defines a plurality of input value intervals (I1, I2), for supplying an interval indication (IND) which indicates the interval (I1, I2) in which the input value (X) lies;
- an input value former (IVC) for forming the table input value (XT) and the interpolator input value (XI) as a function of the interval indication (IND), the table input value (XT) and the interpolator input value (XI) being determined, respectively, by a more significant part (MSP) of the input value and the complementary less significant part (LSP) of variable magnitudes in accordance with the interval indication (IND).

2. A method of supplying an output value (Y) in response to an input value (X) in accordance with a given function (F): Y = F(X), which method comprises the following steps:
- deriving a table input value (XT) and an interpolator input value (XI) from the input value (X);
- effecting a look-up operation in a table (TBL) on the basis of the table input value (XT) in order to obtain a table value (YT);
- carrying out an interpolation (INT) on the basis of the interpolator input value (YI) in order to obtain an interpolation value (YI); and
- combining (OUT) the table value (YT) and the interpolation value (YI) in order to obtain the output value (Y),
characterized in that the method comprises the following steps:
- detecting (DET) among a plurality of input value intervals (I1, I2) the interval (I1, I2) in which the input value (X) lies;
- forming (IVC) the table input value (XT) and the interpolator input value (XI) as a function of the interval (I1 ,I2) in which the input value (X) lies, the table input value (XT) and the interpolator input value (XI) being determined, respectively, by a more significant part (MSP) of the input value and the complementary less significant part (LSP) of variable magnitudes in accordance with the interval (I1 ,I2) in which the input value (X) lies.

3. A device for supplying an output value (Y) in response to an input value (X) in accordance with a given function (F): Y = F(X), which device comprises:
- an input section (INP) for deriving a table input value (XT) and an interpolator input value (XI) from the input value (X);
- a table (TBL) for supplying a table value (YT) in response to the table input value (XT);
- an interpolator (INT) for supplying an interpolation value (YI) in response to the interpolator input value (YI); and
- an output section (OUT) for combining the table value (YT) and the interpolation value (YI) so as to obtain the output value (Y),
characterized in that the input section (INP) of the device comprises:
- an interval detector (DET) which defines a plurality of input value intervals (I1, I2), for supplying an interval indication (IND) which indicates the interval (I1, 12) in which the input value (X) lies;
- an input value former (IVC) for forming the table input value (XT) and the interpolator input value (XI) as a function of the interval indication (IND), the table input value (XT) and the interpolator input value (XI) being determined, respectively, by a more significant part (MSP) of the input value and the complementary less significant part (LSP) of variable magnitudes in accordance with the interval indication (IND).
